(19) Europäisches Patentamt
European Patent Office
Office européen des brevets

(11) **EP 2 799 944 B1**

(12) **EUROPEAN PATENT SPECIFICATION**

(45) Date of publication and mention
of the grant of the patent:
**20.02.2019 Bulletin 2019/08**

(51) Int Cl.:
*G05B 13/04* (2006.01)     *H02J 3/18* (2006.01)
*H02J 3/38* (2006.01)     *H02J 3/46* (2006.01)

(21) Application number: **13165773.6**

(22) Date of filing: **29.04.2013**

(54) **A method for controlling a power generation plant**

Verfahren zur Steuerung einer Stromerzeugungsanlage

Procédé pour commander une installation de production d'énergie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.11.2014 Bulletin 2014/45**

(73) Proprietor: **Siemens Aktiengesellschaft
80333 München (DE)**

(72) Inventors:
• **Andresen, Björn
8752 Ostbirk (DK)**
• **Egedal, Per
7400 Herning (DK)**

• **Goldenbaum, Nikolaus
Glasgow G63 9DE (GB)**
• **Obradovic, Dragan
85521 Ottobrunn (DE)**
• **Stoettrup, Michael
7400 Herning (DK)**
• **Szabo, Andrei
85521 Ottobrunn (DE)**
• **Yin, Bo
7330 Brande (DK)**

(56) References cited:
EP-A1- 1 508 951    EP-A2- 1 035 626
EP-A2- 1 841 036    US-A1- 2008 150 283
US-B2- 7 209 839

**Description**

The invention refers to a method for controlling a power generation plant as well as to a power generation plant and a computer program product.

Several problems arise when controlling the generators of a power generation plant which feed their produced power into an electric power grid. In case that the power grid weakens (i.e. the Short Circuit Ratio SCR becomes lower), controllers in the generators run into troubles. E.g., targeted set points such as the voltage magnitude and the active power provided at the terminal of a generator are not achievable any more. Moreover, the controller of the generator may saturate, i.e. it reaches a limit of its control variables. Furthermore, existing control parameters, e.g. proportional and integral gain parameters in a PI controller, are no longer optimal in case that changes in the power generation plant or the outside power grid occur.

Document EP 1 035 626 A2 discloses the control of several interconnected power systems where several electric parameters of the power systems are measured, predicted and interchanged between adjacent power systems. Based on the electric parameters, an appropriate control apparatus is selected in each power system. The operation of the selected control apparatus is controlled for the purpose of suppressing a voltage fluctuation and/or a reactive power fluctuation.

It is an object of the invention to provide an enhanced method for controlling a power generation plant which enables a reliable and efficient operation of the power generation plant.

This object is solved by the independent patent claims. Preferred embodiments of the invention are defined in the dependent claims.

The method of the invention controls a power generation plant comprising a number of generators connected to an electric power grid, wherein for each generator a voltage set point for a terminal voltage magnitude at a terminal of the generator and a power set point for the active power generated by the generator are fed to a control means of the generator.

The term "the generator" refers to each of the generators in the power generation plant. The voltage and power set points are used as input parameters of the method and can be provided by the power grid operator or a higher level controller in the corresponding power generation plant. The control means in each generator adjusts in subsequent control steps a reactive current and an active current provided by the generator so that the terminal voltage magnitude and the active power reach the voltage and power set points.

The method according to the invention performs in each control step the following sub steps i) to iii). In a step i), the reactive current is estimated for the voltage and power set points based on an electric circuit model of the generator and the power grid, resulting in an estimated reactive current value. An example of the corresponding circuit model is explained in more detail in the detailed description of this application.

In a step ii), the voltage and/or the power set points are varied if the estimated reactive current value fulfills a threshold exceeding criterion, where the threshold exceeding criterion is only met when the estimated reactive current value exceeds a maximum reactive current value or falls below a minimum reactive current value.

In a step iii), the control means adjusts the reactive current and active current based on the voltage and/or the power set points as obtained after step ii). In other words, if a voltage or power set point has been varied in step ii), this varied voltage or power set point is used in step iii). Otherwise, if a voltage or a power set point has not been varied in step ii), the original voltage or power set point as defined in step i) is used.

The invention is based on the finding that dynamic constraints imposed on a power generation plant can be taken into account by adjusting set point values of the active power and the terminal voltage magnitude. Those dynamic constraints are checked in an easy and efficient way by comparing an estimated reactive current with allowed maximum and minimum reactive current values.

In a preferred embodiment, the threshold exceeding criterion is defined such that it is fulfilled in case that the estimated reactive current value exceeds the maximum reactive current value or the maximum reactive current value minus a positive margin value and in case that the estimated reactive current value falls below the minimum reactive current value or the minimum reactive current value plus a positive margin value.

In a particularly preferred embodiment, the maximum reactive current value is determined in step ii) based on a dependency of the maximum reactive current value on the voltage and power set points and/or the minimum reactive current value is determined in step ii) based on a dependency of the minimum reactive current value on the voltage and power set points. This embodiment takes into account that the maximum and minimum reactive current values can vary when the voltage and power set points change.

In another embodiment of the invention, the variation of the voltage and/or power set points in step ii) comprise the following steps:

    a) if the voltage set point is not equal to an optimum terminal voltage magnitude, only the voltage set point (and not the power set point) is varied towards the optimum terminal voltage magnitude;

b) if the voltage set point is equal to the optimum terminal voltage magnitude, only the power set point (and not the voltage set point) is varied.

This embodiment takes into account that the variation of the voltage set point is usually less critical in a power grid than the variation of the power set point.

In a preferred embodiment, in case that the estimated reactive current value exceeds the maximum reactive current value, the optimum terminal voltage magnitude is the terminal voltage magnitude where for the power set point a maximum reactive current value has its biggest value according to the above dependency. Moreover, in case that the estimated reactive current value falls below the minimum reactive current value, the optimum terminal voltage magnitude is preferably the terminal voltage magnitude where for the power set point the minimum reactive current value has its lowest value according to the above dependency. Preferably, in case that the power set point becomes zero in step b), the voltage set point and the power set point are set to predetermined values.

In a particularly preferred embodiment, the control means comprises a voltage controller. The output of this voltage controller may be the adjusted reactive current. However, a so-called feed-forward term (offset) may also be used for the voltage controller resulting in a fast adjustment of the voltage and the power to the voltage and power set point. In this embodiment, in each control step, the estimated reactive current value is used as the offset value for the output of the voltage controller.

In another embodiment of the invention, the control means comprises a phase estimator for estimating the terminal voltage phase. The output of the phase estimator may be the estimated terminal voltage phase. However, a feed-forward term (offset) may also be used for this phase estimator. In this case, in each control step, a terminal voltage phase derived from the estimated reactive current value is used as an offset value for the output of the phase estimator.

Preferably, the above described voltage controller is a PI controller (PI = Proportional Integral) comprising a proportional gain parameter and an integral gain parameter as control parameters.

In another preferred embodiment, one or more control parameters of the control means are changed in case of variations of one or more parameters of the power grid, particularly in case of variations of the Short Circuit Ratio. With this embodiment, the parameters can be better tuned to changed grid characteristics.

In a preferred variant of the invention, the control parameters of the above described PI controller are adapted in case of variations of parameters of the power grid. Preferably, in case of a decreasing Short Circuit Ratio

- the proportional gain parameter and the integral gain parameter are decreased if the variation of the active power is below a predetermined threshold;
- the proportional gain parameter and the integral gain parameter are increased if the variation of the active power exceeds the predetermined threshold.

This embodiment results in an optimized operation of the control means even in case of weak grids (i.e. grids with a low Short Circuit Ratio).

Preferably, the above described method of the invention is used in a power generation plant in the form of a wind farm comprising one or more wind turbines as generators.

Besides the above described method, the invention also refers to a power generation plant comprising a number of generators, where the power generation plant is adapted to perform the method according to the invention or one or more preferred embodiments of the method according to the invention, when the generators are connected to an electric power grid.

Furthermore, the invention refers to a computer program product comprising a program code stored on a machine readable medium for performing the method of the invention or one or more preferred embodiments of the method of the invention when the program code is executed on a computer.

In the following, preferred embodiments of the invention are described in detail with respect to the accompanying drawings, wherein:

Fig. 1          shows a schematic representation of a wind turbine and power grid controlled according to an embodiment of the invention;

Fig. 2          shows a complex diagram indicating voltage and current values with respect to the wind turbine and grid of Fig. 1;

Fig. 3          shows a first embodiment of a control means executing the method of the invention;

Fig. 4          shows a diagram indicating the dependency of a maximum reactive current on the terminal voltage magnitude and the active power;

Fig. 5                is a flow diagram illustrating an embodiment of the invention;

Fig. 6                illustrates a second embodiment of a control means executing the method of the invention;

Fig. 7 and Fig. 8    are diagrams illustrating the gain of the system shown in Fig. 1.

The embodiments as described in the following provide an optimized control of the wind turbines in a wind farm (also named as wind park) in order to fulfill predetermined grid requirements of the operator of a power grid to which the wind farm is connected via a so-called point of common coupling. According to the invention, limitations with respect to the reactive current produced by each wind turbine in the wind farm are taken into account. To do so, estimated values of this reactive current are calculated on a circuit model for each wind turbine in combination with the power grid to which the wind turbine is connected.

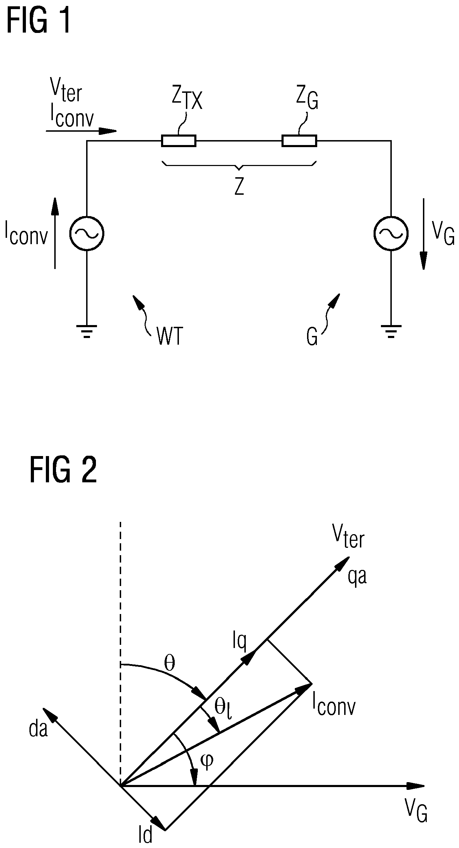

Fig. 1 shows the circuit model used in the embodiments described herein for a single wind turbine WT. Fig. 1 is a simplified representation of the wind turbine WT with the turbine transformer and the power grid. The left part of Fig. 1 refers to the wind turbine WT and the right part to the power grid G. The wind park comprises a plurality of turbines WT which are all connected to the same point of common coupling (not shown) which is located between the impedance $Z_{TX}$ and $Z_G$ in Fig. 1. In the following, pu quantities (pu = per unit) are used so that the circuit equations can be written without the need of explicit transformer ratios. The converter of the wind turbine WT provides a current $I_{conv}$ as well as a terminal voltage $V_{ter}$ at a terminal of the wind turbine which is connected to the grid via a turbine transformer and a wind park transformer. Those transformers are simplified with only a straight impedance $Z_{TX}$. The impedance of the grid is designated as $Z_G$ in Fig. 1. The turbine sees the impedance $Z = Z_{TX} + Z_G$ at its terminal. The voltage of the grid G is designated as $V_G$ in Fig. 1.

Based on the representation of Fig. 1, the dq decomposition as shown in Fig. 2 is used to describe the circuit model. Fig. 2 shows the complex representation of the voltages and the currents. The grid voltage $V_G$ is used as a phase reference and thus represents a real value along the real axis in Fig. 2. The current $I_{conv}$ is described by a dq composition with the q-axis qa along the terminal voltage $V_{ter}$ and the d-axis da perpendicular to the q-axis. The component of $I_{conv}$ along the d-axis da is the reactive current $I_d$ and the component of $I_{conv}$ along the q-axis qa is the active current $I_q$. The dq decomposition facilitates the control of the active and the reactive power by the controlling of the projections of the current on the terminal voltage and perpendicular to it. The phase of the terminal voltage $V_{ter}$ is designated as $\varphi$ or equivalently as $\theta = \pi/2 - \varphi$. The current $I_{conv}$ is rotated with $-\theta$ before it is injected.

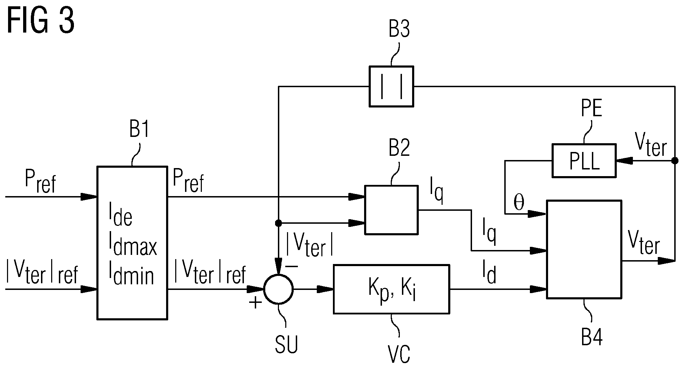

The wind turbine WT includes a control means described later on where the phase $\theta$ is estimated by a PLL circuit (phase estimator PE in Fig. 3). The control means also controls the current component $I_d$ (i.e. the reactive current). To do so, the control means comprises a voltage controller which is designated as VC in Fig. 3.

The following notations are used for the circuit model of the embodiments described herein:

$Z_G$      Grid impedance (complex value)

$Z_{TX}$     Transformer impedance (complex value)

$Z = Z_G + Z_{TX}$     Short circuit impedance seen from the turbine terminal (complex value)

$R = \text{real}\{Z\}$     Short circuit resistance (real value)

$X = \text{imag}\{Z\}$     Short circuit reactance (real value)

$$|Z| = \sqrt{(R^2 + X^2)}$$     Short circuit impedance magnitude (real value)

$V_G$      Grid voltage, used also as phase reference, so $V_G$ is real

$P$      Active power at the turbine terminal (real value)

$Q$      Reactive power at the turbine terminal (real value)

$S = P + jQ$     Apparent power (complex value)

$$|S| = \sqrt{(P^2 + Q^2)}$$     Apparent power magnitude (real value)

$V_{ter}$     terminal voltage (complex value)

$|V_{ter}|$     Absolute value of the terminal voltage (real value)

$\varphi$      Phase of the $V_{ter}$ with respect to $V_G$

$\theta = \pi/2 - \varphi$     The complementary of the voltage phase, used for the dq decomposition

$I_q, I_d$      Active, resp. reactive components of the current in the dq decomposition (real) $I_{conv}$ Current at the output of the converter (complex value)

SCR      Short Circuit Ratio, equal with the short circuit power divided by the nominal power (real value)

$S_{SC}$     Absolute value of short circuit power (real value)

$P_N$    Nominal power (real value)

$V_N$    Nominal voltage (real value)

XR    Reactance to resistance ratio, i.e. XR = imag$\{Z_G\}$/real$\{Z_G\}$ (real value)  $j = \sqrt{-1}$

The relations connecting the above quantities are given by the well-known Kirchhoff laws and by their definitions as follows:

$$V_{\text{ter}} \ = \ Z \ I_{\text{conv}} \ + \ V_G \tag{1}$$

$$V_{\text{ter}} \ = \ |V_{\text{ter}}| e^{j\varphi} \ = \ |V_{\text{ter}}| e^{j\,(\pi/2-\theta)} \tag{2}$$

$$S \ = \ P \ + \ jQ \ = \ V_{\text{ter}} \cdot I_{\text{conv}}^{\ *} \tag{3}$$

$$I_{\text{conv}} \ = \ \sqrt{I_d^2 + I_q^2}\, e^{j(\varphi-\theta_i)} = \sqrt{I_d^2 + I_q^2}\, e^{j(a\tan I_q/I_d - \theta)} \ = (I_d \ + \ j \ I_q) \ e^{-j\theta} \tag{4}$$
$$= \ (I_q \ - \ j \ I_d) \ e^{j\varphi}$$

$$SCR \ = \ S_{\text{SC}} \ / \ P_N \ = \ (|V_N|^2 \ / \ |Z_G|) \ / \ P_N \tag{5}$$

$$\text{XR} \ = \ X_G \ / \ R_G \tag{6}$$

using $P_N$ = 1pu and $V_N$ = 1pu

$$\rightarrow \ R = \frac{1}{\text{SCR}\sqrt{\text{XR}^2 + 1}} + \text{real}\{Z_{\text{TX}}\} \tag{7}$$

$$X \ = \ \text{XR} \ R \ + \ \text{imag}\{Z_{\text{TX}}\} \tag{8}$$

$$I_q \ = \ P \ / \ |V_{\text{ter}}| \tag{9}$$

$$I_d \ = \ Q \ / \ |V_{\text{ter}}| \tag{10}$$

Roman writing is used for SCR and XR instead of italic to differentiate the variable XR from the multiplication $X$ times $R$. The above angles refer to the angles of a complex number, i.e. angle$\{x\}$ = atan(imag($x$)/real($x$)).

The above equations form a circuit model in the meaning of patent claim 1. Furthermore, in the method as described in the following, SCR, XR, $V_G$ and $Z_{\text{TX}}$ are known, and hence $Z$, respectively $R$ and $X$ can be determined with equations (7) and (8). Particularly, the grid impedance $Z_G$ and the grid voltage $V_G$ are estimated by the wind park operater or provided by the operator of the power grid. From the grid impedance, the value XR can be derived.

As will be described later on, the above circuit model will be used in order to estimate the reactive current $I_d$. Based on this estimation, the control means of each wind turbine determines whether the estimated current is lower than a predetermined maximum current which guarantees that capabilities of the wind turbines are not exceeded for a given terminal voltage and active power. If $I_d$ exceeds the maximum value, corresponding set points for the terminal voltage magnitude and the active power are adjusted. In the same way, a minimum current is defined where the reactive current shall not fall below the minimum current.

Fig. 3 shows a first embodiment of a control means in a wind turbine WT performing an adjustment of the above mentioned set points. The control means of Fig. 3 receives a set point for the terminal voltage magnitude which is designated as $|V_{\text{ter}}|_{\text{ref}}$. Furthermore, the control means receives a set point for the active power which is designated as

$P_{ref}$. The set points are provided by the grid operator or by another higher level controller for each turbine in order to guarantee desired properties at the point of common coupling. The determination of those set points does not lie within the scope of this invention. Those set points are rather used as inputs in order to perform the method of the invention.

The set points are processed in a block B1 of Fig. 3. This block estimates the value for the reactive current $I_d$. This estimated value is designated as $I_{de}$. Furthermore, the corresponding maximum reactive current value $I_{dmax}$ and minimum reactive current value $I_{dmin}$ are taken into account. The method performed by block B1 will be described in more detail below. In case that the estimated reactive current $I_{de}$ is higher than $I_{dmax}$ or lower than $I_{dmin}$, the values of the set points for the terminal voltage magnitude and the active power are varied until the estimated value $I_{de}$ lies below $I_{dmax}$ or above $I_{dmin}$. If the first calculation of $I_{de}$ results in a value below $I_{dmax}$ or above $I_{dmin}$, no variation of the set points will be performed by block B1.

The set points for the terminal voltage magnitude and the active power (varied or unvaried) are fed to a voltage controller VC and to a block B2. The voltage controller VC gets as input the error between the measured terminal voltage magnitude $|V_{ter}|$ and the voltage magnitude $|V_{ter}|_{ref}$ according to the set point. The error is calculated by the subtractor SU. Furthermore, the magnitude (i.e. the absolute value) of $V_{ter}$ is calculated by block B3 which receives the terminal voltage $V_{ter}$. The voltage controller VC is a so-called PI controller (PI = Proportional Integral) being based on a proportional gain parameter $K_p$ and an integral gain parameter $K_i$. Such PI controllers are well-known in the prior art and, thus, are not described in more detail.

The voltage controller VC adjusts the reactive current $I_d$, i.e. the output of the voltage controller is the reactive current $I_d$. The control of the voltage controller is such that the error between the actual voltage terminal magnitude $|V_{ter}|$ and the voltage set point $|V_{ter}|_{ref}$ is minimized. The active current $I_q$ is obtained in the control means of Fig. 3 by block B2 which calculates this current based on the power set point $P_{ref}$ and the terminal voltage magnitude $|V_{ter}|$ by dividing the power set point by the terminal voltage magnitude.

The control means of Fig. 3 further includes a phase estimator PE which estimates the phase of the terminal voltage $V_{ter}$. This phase estimator includes a PLL circuit which is also implemented as a PI controller with corresponding parameters. The estimated phase $\theta$ as well as the active and reactive currents $I_d$ and $I_q$ are fed to the block B4. Based on those input values, the output of block B4 is the terminal voltage $V_{ter}$ set by the control means.

Based on the above circuit model according to equations (1) to (10), several circuit solutions are possible which are presented in the following.

Circuit solution for given $P$ and $Q$ (Solve for $|V_{ter}|$)

It is assumed that $P, Q$ are given (e.g. are the set points of the turbine). Then the steady state regime of the turbine circuit can be computed analytically by solving the system of equations of (1) and (3). The resulting equation is:

$$(|V_{ter}|^2)^2 - 2|V_{ter}|^2 (PR + XQ + VG^2/2) + P^2 R^2 + X^2 Q^2 + X^2 P^2 + R^2 Q^2 = 0 \qquad (11)$$

The equation of second degree in $|V_{ter}|^2$ has 4 solutions for $|V_{ter}|$, out of which only two are positive:

$$|V_{ter}|_1 = \sqrt{PR + QX + V_G^2/2 + \sqrt{(PR + QX + V_G^2/2 + |S||Z|)(PR + QX + V_G^2/2 - |S||Z|)}} \qquad (12)$$

$$|V_{ter}|_2 = \sqrt{PR + QX + V_G^2/2 - \sqrt{(PR + QX + V_G^2/2 + |S||Z|)(PR + QX + V_G^2/2 - |S||Z|)}} \qquad (13)$$

The equation has real solutions only if the quantity below the square root is positive. This can be rewritten as:

$$-R^2 Q^2 + (2PRX + V_G^2 X) Q + (V_G^4/4 + PRV_G^2 - P^2 X^2) > 0 \qquad (14)$$

The inequality above in $Q$ with parameters $P, R, X$ and $V_G$ is satisfied only if

$$(2PRX + V_G^2 X)^2 + 4R^2 (V_G^4/4 + PRV_G^2 - P^2 X^2) \ge 0 \qquad (15)$$

which imposes requirements for *P* and if Q is in the interval given by the solutions (notice the negative coefficient of $Q^2$) :

$$Q_1 = \frac{-\left(2PRX + V_G{}^2 X\right) + \sqrt{\left(-2PRX + V_G{}^2 X\right)^2 + 4R^2\left(V_G{}^4/4 + PRV_G{}^2 - P^2 X^2\right)}}{-2R^2} \qquad (16)$$

$$Q_2 = \frac{-\left(2PRX + V_G{}^2 X\right) - \sqrt{\left(-2PRX + V_G{}^2 X\right)^2 + 4R^2\left(V_G{}^4/4 + PRV_G{}^2 - P^2 X^2\right)}}{-2R^2} \qquad (17)$$

$$Q_1 \leq Q_2$$

With $|V_{ter}|$ computed, then $I_d$ and $I_q$ are straight forward to compute, according to the formulas (9) and (10), while $\theta$ is given by:

$$\theta = -\text{angle}\left\{\frac{V_G}{j|V_{ter}| - \left(I_d + jI_q\right)Z}\right\} \qquad (18)$$

The function angle refers to the atan function as mentioned before.

Circuit solution for given *P* and $I_d$ (Solve for *Q*)

In comparison to the previous section, it is assumed that *P* and $I_d$ are known and not *Q*. This circuit does not have an analytical solution in this case. Since $Q = I_d |V_{ter}|$, the problem is transformed into calculating $|V_{ter}|$ leading to the following two equations (based on the solution for $|V_{ter}|$ when P and Q were known):

$$\sqrt{PR + |V_{ter}|I_d X + V_G{}^2/2 + \sqrt{\left(PR + |V_{ter}|I_d X + V_G{}^2/2 \,|S\|Z|\right)\left(PR + |V_{ter}|I_d X + V_G{}^2 - |S\|Z|\right)}} - |V_{ter}| = 0 \qquad (19)$$

$$\sqrt{PR + |V_{ter}|I_d X + V_G{}^2/2 - \sqrt{\left(PR + |V_{ter}|I_d X + V_G{}^2/2 \,|S\|Z|\right)\left(PR + |V_{ter}|I_d X + V_G{}^2 - |S\|Z|\right)}} - |V_{ter}| = 0 \qquad (20)$$

These equations do not have an analytical solution, but they can be solved efficiently numerically.
The angle can be computed as before with equation (18) after $|V_{ter}|$ was determined.
This solution is important for the computation of the gains of the voltage controller VC and the phase estimator PE of Fig. 3, as will be described later (see equ. (38)).

Circuit solution for given *P* and $|V_{ter}|$ (Solve for *Q*)

In this case, based on equation (11), a second degree equation in *Q* is formulated:

$$aQ^2 + bQ + c = 0 \qquad (21)$$

where

$$a = |Z|^2 \qquad (22)$$

$$b = -2X|V_{ter}|^2 \qquad (23)$$

$$C = P^2 X^2 + (|V_{ter}|^2 - PR)^2 - V_G^2 |V_{ter}|^2 \tag{24}$$

The equation has a solution if $b^2 - 4ac \geq 0$, and it has two possible solutions:

$$Q_{1,2} = \frac{-b \pm \sqrt{b^2 - 4ac}}{2a} \tag{25}$$

From the two solutions, the one which results in minimum $I_d$ is used in the method described herein in order to avoid getting into reactive current limitations. $I_d$, $I_q$, and $\theta$ can be then derived accordingly to the previously mentioned equations (9), (10) and (18).

As explained later, this solution is important in the optimization of the turbine control where the calculated variables $I_d$ and $\theta$ will be used as feed-forward terms (offsets) in the voltage controller VC and the phase estimator PE. This solution is also used for varying the original set points for the active power and the terminal voltage, so that $I_d$ will not come into limitations.

As mentioned above, the control means of Fig. 3 uses a maximum reactive current value $I_{dmax}$ as well as a minimum reactive current value $I_{dmin}$. In the embodiment described herein, the maximum and minimum reactive current values depend on several parameters including the terminal voltage magnitude $|V_{ter}|$ and the active current $I_q$ (i.e. on $P$ due to eq. (9)).

The reactive current is limited, depending on the capabilities of the turbine and the current working point.

$I_{dcircle}$ is the upper limit of the reactive current considering the maximum total apparent current supported by the turbine converter $I_{t\_max}$ and also considering a parameter $I_{d\_max\_ss}$ which is a known parameter of the turbine investigated by the inventors. This parameter may also be disregarded if not defined for the turbine.

$$I_{dcircle} = \min(I_{d\_max\_ss}, \text{sqrt}(I_{t\_max}^2 - I_q^2)) \tag{26}$$

The lower limit on the reactive current is:

$$I_{dmin} = -I_{dcircle} \tag{27}$$

For the upper limit of the reactive current, additionally to $I_{dcircle}$, also the well-known modulation depth of the turbine generator (indicated by subscript "gen") is a limiting factor. The condition is that $V_{inverter}$ is smaller than $V_{inverter\_max} = V_{dc} * K_{mod\_depth}$.

Consequently, it results the equation:

$$I_{d\_modDepth} = \frac{-X_{gen}|V_{ter}|}{R_{gen}^2 + X_{gen}^2} +$$
$$\frac{\sqrt{X_{gen}^2 |V_{ter}|^2 - (R_{gen}^2 + X_{gen}^2)\left((R_{gen}^2 + X_{gen}^2)I_q^2 + 2R_{gen}I_q|V_{ter}| + |V_{ter}|^2 - V_{inv\_max}^2\right)}}{R_{gen}^2 + X_{gen}^2} \tag{28}$$

where $R_{gen}$ and $X_{gen}$ are the resistance and reactance of the generator. Finally, the upper bound on the reactive current is given by:

$$I_{dmax} = \min(I_{dcircle}, I_{d\_modDepth}) \tag{29}$$

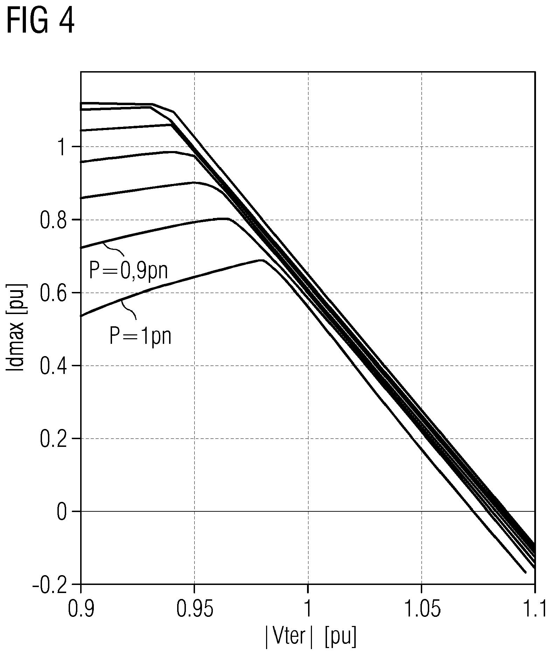

In Fig. 4, the dependency of $I_{dmax}$ on $P$ and $|V_{ter}|$ is illustrated for an example of a 3.6 MW wind turbine investigated by the inventors. Such a dependency is needed for the variation of the set points in order to increase $I_{dmax}$, in the case that the turbine gets into reactive current limitation.

In the diagram of Fig. 4, the values of $I_{dmax}$ in dependency on $|V_{ter}|$ are shown for different power values P represented by separate lines. The diagram includes power values for P = 1 to P = 0.1 pu. The higher the line in diagram 4, the lower is the power value. For clarity reasons, only the lines for P = 1 pu and P = 0.9 pu are specified by the corresponding values.

As evident from Fig. 4, on the lower voltage side, the maximum apparent current limitation (equation (26)) is active, while at high voltages, the modulation depth is the limiting factor. At high voltages, the reduction of $|V_{ter}|$ has a significant influence on $I_{dmax}$, while the power reduction has limited effect. At low voltages, the reduction of the power has significant effect, while the increase of the voltage has limited effect.

Based on the above-described circuit solution for given P and $|V_{ter}|$, the reactive current value $I_{de}$ is determined in the control means of Fig. 3 as follows:

For a given set point pair $|V_{ter}|_{ref}$ and $P_{ref}$, it is possible to compute two possible reactive power states analytically by using equations (22) to (25):

$$a = |Z|^2 \tag{30}$$

$$b = -2X|V_{ter}|_{ref}^2 \tag{31}$$

$$c = P_{ref}^2 X^2 + (|V_{ter}|_{ref}^2 - PR)^2 - V_G^2 |V_{ter}|_{ref}^2 \tag{32}$$

$$Q_{1,2} = \frac{-b \pm \sqrt{b^2 - 4ac}}{2a} \tag{33}$$

Then, using Equation (10), the two possible reactive current set points are:

$$I_{d\,1,2} = Q_{1,2} / |V_{ter}|_{ref} \tag{34}$$

out of which the smallest one is the estimated steady state current $I_{de}$ indicated in Fig. 3. This current is compared with the maximum current $I_{dmax}$ and the minimum reactive current $I_{dmin}$ as determined by the above described equations (27) and (29).

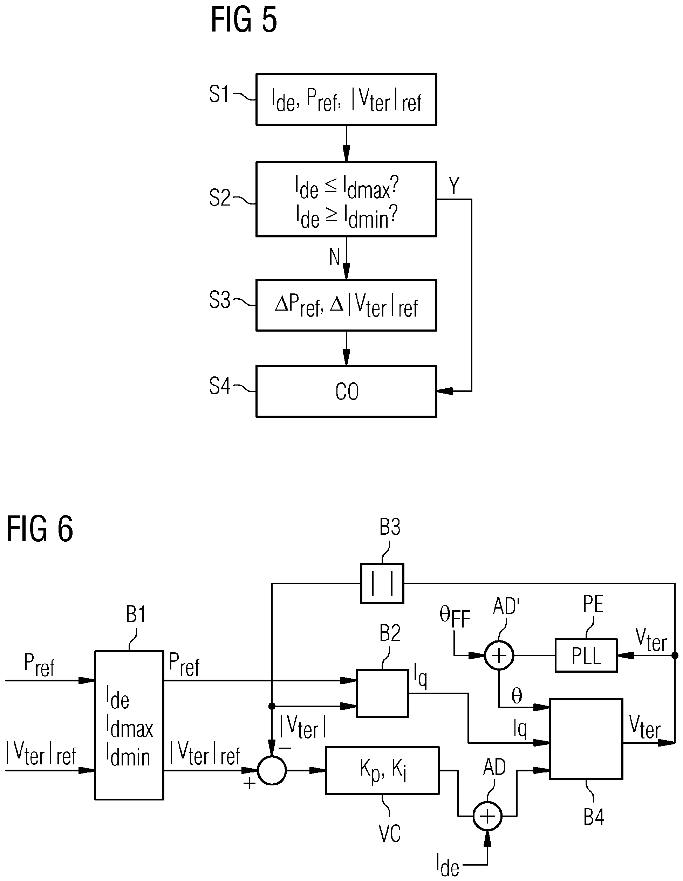

Fig. 5 shows a diagram illustrating the general steps performed by block B1 of the control means of Fig. 3. In each control step, the current $I_{de}$ is estimated based on the power set point $P_{ref}$ and the voltage set point $|V_{ter}|_{ref}$ using equations (30) to (34) (step S1). In a step S2, it is determined whether $I_{de}$ is equal or smaller than $I_{dmax}$ and whether $I_{de}$ is equal or greater than $I_{dmin}$. If this is the case (branch Y), the control of the control means as explained above is continued as indicated by reference sign CO in step S4. In case that $I_d$ exceeds the maximum reactive current value or falls below the minimum reactive current value (branch N), the set points for $P_{ref}$ and $V_{ter}$ are varied in step S3 as indicated by the variations $\Delta$. Thereafter, the control is continued in step S4.

In the following, a preferred variant of the algorithm of Fig. 5 is explained for the maximum reactive current value $I_{dmax}$, taking into account the diagram of Fig. 4. This algorithm may be applied analogously to the minimum reactive current value $I_{dmin}$.

From Fig. 4, it can be observed that for a given active power P there is an optimal $|V_{ter}|_{opt}$ for which the reactive current limit is maximized. The aim of the algorithm for modifying set points $|V_{ter}|_{ref}$ and $P_{ref}$ is to try to find a pair of set points for which $I_d$ is smaller than $I_{dmax}$ taking into account $|V_{ter}|_{opt}$. Additionally a margin is introduced, for compensating controller dynamics, model uncertainties and measurement errors, so finally the required constraint is:

$$I_{de} \leq I_{dmax} - I_{GM} \tag{35}$$

$I_{de}$ is computed with the chain of equations (30) to (34) for the set point $|V_{ter}|_{ref}$ and $P_{ref}$. $I_{dmax}$ is computed based on the equation (26) to (29), again for the set points.

If the constraint of equation (35) is not met, the variation of the set points is done so that the active power is maximized, i.e. $|V_{ter}|_{ref}$ has a lower priority compared with $P_{ref}$. The algorithm is described in the following.

Algorithm:

- determine $|V_{ter}|_{opt}$ that maximizes the reactive current upper limit as a function of $P_{ref}$ and with parameters of the turbine electrical properties (the maximum of the curves in Fig. 4). The computation can be performed numerically using equations (26) to (29) for a grid of values of $P_{ref}$ and then interpolated between these points.
- define a small variation of $|V_{ter}|_{ref}$, e.g. $\Delta V = 0.0001$ pu and a small variation of $P_{ref}$, e.g. $\Delta P = 0.0001$ pu.
- at each moment $t$, in case that $I_{de} > I_{dmax}$ - $I_{GM}$ ($I_{de}$ is calculated based on equations (30) to (34)), given the set points $|V_{ter}|_{ref}$ and $P_{ref}$:

  • repeat until break

    1. if $|V_{ter}|_{ref} \neq |V_{ter}|_{opt}(P_{ref})$ - modify $|V_{ter}|_{ref}$ toward $|V_{ter}|_{opt}$ keeping the power $P_{ref}$

$$|V_{ter}|_{ref} \leftarrow |V_{ter}|_{ref} + \Delta V * sign\{|V_{ter}|_{opt} - |V_{ter}|_{ref}\}$$

    2. compute $I_{de}$ and $I_{dmax}$ for the given $|V_{ter}|_{ref}$ and $P_{ref}$
    3. if $I_{de} \leq I_{dmax}$ - $I_{GM}$
    break
    4. if abs$\{|V_{ter}|_{ref}$ - $|V_{ter}|_{opt}(P_{ref})\} < \Delta V$, i.e. the terminal voltage reached the optimum

$$P_{ref} \leftarrow P_{ref} - \Delta P$$

$$|V_{ter}|_{ref} \leftarrow |V_{ter}|_{opt}(P_{set})$$

    5. if $P_{ref} \leq 0$
    no solution can be found, but this is highly unlikely
    $|V_{ter}|_{ref} = 1$pu
    $P_{ref} = 0$pu
    break

In another preferred embodiment of the invention, the estimated reactive current value $I_{de}$ is used as a feed-forward term (offset) for the controller VC and the estimator PE in the control means. Such an embodiment is shown in Fig. 6. In comparison to the control means of Fig. 3, the output of the voltage controller VC is not fed directly to the block B4 but to an adder AD which receives as a feed-forward term the current $I_{de}$ estimated in block B1. Analogously, the estimated phase $\theta$ is not directly fed to block B4 but to an adder AD' receiving an offset phase value $\theta_{FF}$. This offset value is calculated from $I_{de}$ as follows:
Using Equations (9) and (18), the feed-forward phase for the phase estimator PE can be predicted as:

$$I_q = P_{ref} / |V_{ter}|_{ref} \qquad (36)$$

$$\theta_{FF} = -\text{angle}\left\{\frac{V_G}{j|V_{ter}|_{ref} - (I_{de} + jI_q)Z}\right\} \qquad (37)$$

Due to the use of the above feed-forward terms fed to the adder AD and AD', the burden of the controller VC and the phase estimator PE is reduced because those components only have to deal with the modelling errors where other dynamic properties are not captured in those components. This results in a fast adjustment of the output values of the components VC and PE.
In another embodiment of the invention, parameters of the voltage controller VC and the phase estimator PE as shown in Fig. 3 and Fig. 6 are adjusted. This embodiment is based on an analysis of the system gain. The system is the simple circuit described with impedances as shown in Fig. 1, the input parameters being the active and the reactive current, and $\theta$. Actually, $I_q$ is directly dependent on the two outputs of the system $P$ and $|V_{ter}|$, so the gains need only to be computed with respect to $I_d$ and $\theta$. The gains are represented by the following formula:

$$\begin{bmatrix} \Delta|V_{ter}| \\ \Delta\theta \end{bmatrix} = \begin{bmatrix} \partial|V_{ter}|/\partial I_d & \partial|V_{ter}|/\partial P \\ \partial\theta/\partial I_d & \partial\theta/\partial P \end{bmatrix} \begin{bmatrix} \Delta I_d \\ \Delta P \end{bmatrix} \tag{38}$$

Because the system is non-linear, the value of the gains will depend on the operating point.

System gains for $|V_{ter}|$

The gains are computed by deriving the equations (19) and (20). The equations are quite complex, so computer simulations were used to obtain the gradients.

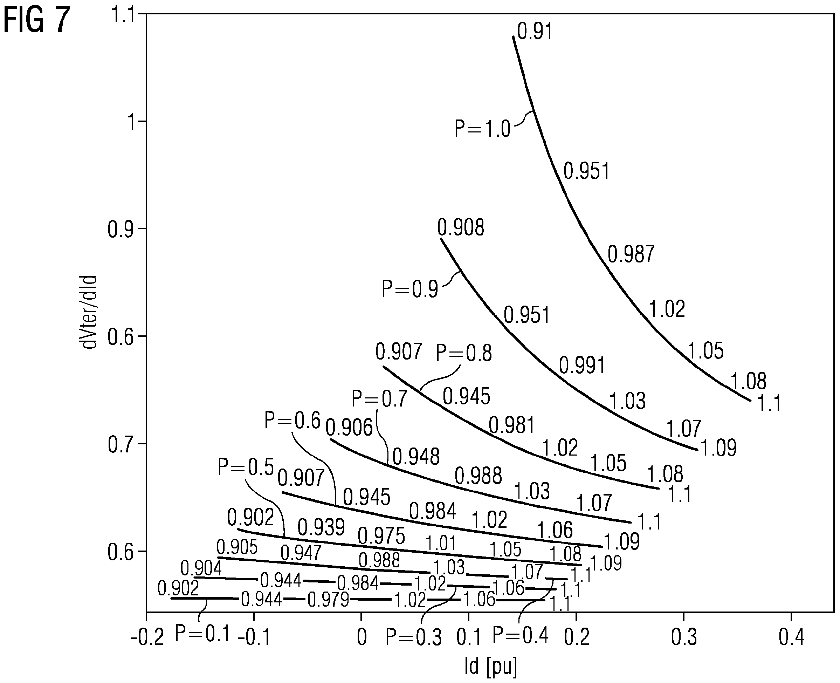

Fig. 7 shows the system gain $\partial|V_{ter}|/\partial I_d$ in dependence on $I_d$ for SCR = 2, XR = 20, $V_G$ = 1 with P as parameter. Each line in Fig. 7 is computed for a different active power P. On each line, the operating points $|V_{ter}|$ are displayed by corresponding numbers.

Looking at the dependencies of the gain on the power and terminal voltage, the following observations can be made:

- The higher the active power, the higher $\partial|V_{ter}|/\partial I_d$ system gain. This is of course true also if the SCR is reduced because then the ratio between the active power P and SCR will be increased; the lower the SCR the higher the gain.
- It seems that a lower terminal voltage $|V_{ter}|$ (or a lower reactive current $I_d$) leads to a higher gain.

Consequently, the above analysis of the gain $\partial|V_{ter}|/\partial I_d$ could lead to the conclusion that the voltage controller gains should be decreased when the SCR decreases, in order to compensate the increase of $\partial|V_{ter}|/\partial I_d$. Nevertheless, this conclusion is contradicted by the following investigation which also takes the gain $\partial|V_{ter}|/\partial P$ into account.

Gain of $|V_{ter}|$ with respect with the active power $\partial|V_{ter}|/\partial P$

$$\partial|V_{ter}|/\partial P = (|V_{ter2}| - |V_{ter1}|) / dP,$$

where $I_d$ is constant and $|V_{ter1}|$ is computed for the power $P$ and $|V_{ter2}|$ is computed for power $P$+d$P$.

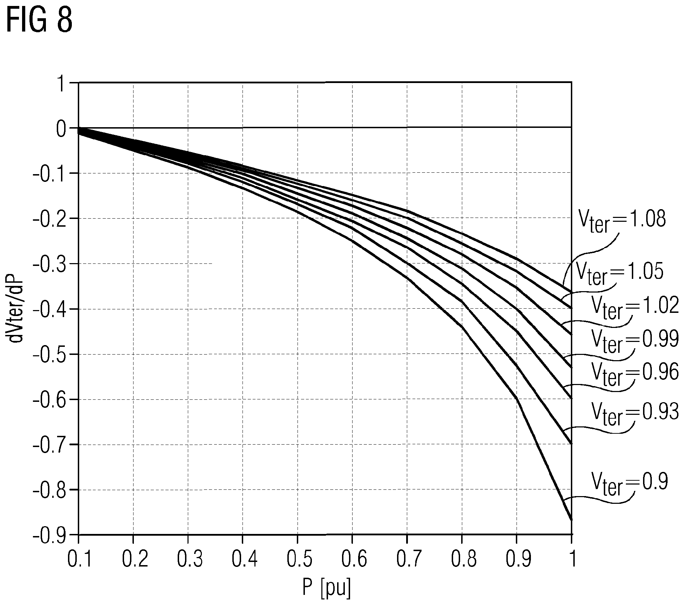

Fig. 8 shows the system gain $\partial|V_{ter}|/\partial P$ in dependence on P for SCR = 2, XR = 20, $V_G$ = 1 with $|V_{ter}|$ as parameter. Each line in Fig. 8 is computed for a different terminal voltage. It can be observed from Fig. 8 that the higher the power, the lower the gain (the higher the negative gain) $\partial|V_{ter}|/\partial P$ for the same working point of $|V_{ter}|$.

In order to compensate changed system gains due to a variation of the SCR, the gain parameters $K_p$ and $K_i$ of the voltage controller VC as shown in Fig. 3 and Fig. 6 shall be changed as follows:

- at lower SCR, respectively higher power, controller gain parameters should be decreased;
- if the power is also changing at the same time, the gain parameters need to be increased, otherwise the voltage will drop with the increase in power.

Example: power increasing at $|V_{ter}|$ = 1 pu from 0.9 pu to 1 pu.
System gains are:

$$\partial|V_{ter}|/\partial I_d \ \big|_{P=0.9, \ Vter = 1} = 0.78$$

$$\partial|V_{ter}|/\partial I_d \ \big|_{P=1, \ Vter = 1} = 0.85$$

$$\partial|V_{ter}|/\partial P \ \big|_{P=0.9, \ Vter = 1} = -0.4$$

$$\partial|V_{ter}|/\partial P \ \big|_{P=1, \ Vter = 1} = -0.52$$

$$\Delta \ (\partial |V_{\text{ter}}|/\partial P) \ = -0.12$$

$$\Delta \ (\partial |V_{\text{ter}}|/\partial I_{\text{d}}) \ = \ 0.07$$

The example above illustrates that the gain of $|V_{ter}|$ with respect to P is decreasing faster than the gain of $|V_{ter}|$ with respect to $I_d$ is increasing, when the active power P is increasing. Consequently, if the voltage controller has to control the voltage in conditions where the active power is increased and the power continues to change at the same rate, then the gain of the voltage controller needs to be increased.

Based on the above considerations, the proportional gain parameter $K_p$ and the integral gain parameter $K_i$ of the voltage controller VC in Fig. 3 and Fig. 6 is preferably changed such that in case of a decreasing Short Circuit Ratio

- the proportional gain and the integral gain are decreased if the variation of the active power is below a predetermined threshold;
- the proportional gain and the integral gain are increased if the variation of the active power exceeds the predetermined threshold.

This guarantees a constant system gain even in case of weak grids having a small Short Circuit Ratio.

The above described embodiments of the invention have several advantages. Particularly, the generators of a power generation plant (e.g. a wind park) can be run in much lower ranges of the Short Circuit Ratio. Hence, the invention enables the extension of the operational range of a power generation plant in terms of the Short Circuit Ratio. Furthermore, the invention enables the operation of the power generation plant in a controlled manner even when the transfer capabilities do not allow to feed all available power to the power grid. In the latter case, the power generation plant will reduce its power to achieve a safe operation point.

**Claims**

1. A method for controlling a power generation plant comprising a number of generators (WT) connected to an electric power grid (G), the method being **characterized in that**:

   wherein for each generator (WT) a voltage set point ($|V_{ter}|_{ref}$) for a terminal voltage magnitude ($|V_{ter}|$) at a terminal of the generator (WT) and a power set point ($P_{ref}$) for the active power (P) generated by the generator (WT) are fed to a control means of the generator (WT), where the control means adjusts in subsequent control steps a reactive current ($I_d$) and an active current ($I_q$) provided by the generator (WT) so that the terminal voltage magnitude ($|V_{ter}|$) and the active power (P) reach the voltage and power set points ($|V_{ter}|_{ref}$, $P_{ref}$), wherein in each control step:

   i) the reactive current ($I_d$) is estimated for the voltage and power set points ($|V_{ter}|_{ref}$, $P_{ref}$) based on an electric circuit model of the generator (WT) and the power grid (G), resulting in an estimated reactive current value ($I_{de}$) ;
   ii) if the estimated reactive current value ($I_{de}$) fulfils a threshold exceeding criterion, the voltage and/or the power set points ($|V_{ter}|_{ref}$, $P_{ref}$) are varied, where the threshold exceeding criterion is always met when the estimated reactive current value ($I_{de}$) exceeds a maximum reactive current value ($I_{dmax}$) or falls below a minimum reactive current value ($I_{dmin}$);
   iii) the control means adjusts the reactive current ($I_d$) and active current ($I_q$) based on the voltage and/or the power set points ($|V_{ter}|_{ref}$, $P_{ref}$) as obtained after step ii) .

2. The method according to claim 1, wherein the threshold exceeding criterion is defined such that it is fulfilled in case that the estimated reactive current value ($I_{de}$) exceeds the maximum reactive current value ($I_{dmax}$) or the maximum reactive current value ($I_{dmax}$) minus a positive margin value and in case that the estimated reactive current value ($I_{de}$) falls below the minimum reactive current value ($I_{dmin}$) or the minimum reactive current value ($I_{dmin}$) plus a positive margin value.

3. The method according to claim 1 or 2, wherein the maximum reactive current value ($I_{de}$) is determined in step ii) based on a dependency of the maximum reactive current value ($I_{dmax}$) on the voltage and power set points ($|V_{ter}|_{ref}$, $P_{ref}$) and/or wherein the minimum reactive current value ($I_{dmin}$) is determined in step ii) based on a dependency of the minimum reactive current value ($I_{dmin}$) on the voltage and power set points ($|V_{ter}|_{ref}$, $P_{ref}$).

4. The method according to one of the preceding claims, wherein in step ii) the variation of the voltage and/or the power set points ($|V_{ter}|_{ref}$, $P_{ref}$) comprises the following steps:

    a) if the voltage set point ($|V_{ter}|_{ref}$) is not equal to an optimum terminal voltage magnitude ($|V_{ter}|_{opt}$), only the voltage set point ($|V_{ter}|_{ref}$) is varied towards the optimum terminal voltage magnitude ($|V_{ter}|_{opt}$);
    b) if the voltage set point ($|V_{ter}|_{ref}$) is equal to the optimum terminal voltage magnitude ($|V_{ter}|_{opt}$), only the power set point ($P_{ref}$) is varied.

5. The method according to claims 3 and 4, wherein in case that the estimated reactive current value ($I_{de}$) exceeds the maximum reactive current value ($I_{dmax}$), the optimum terminal voltage magnitude ($|V_{ter}|_{opt}$) is the terminal voltage magnitude ($|V_{ter}|$) where for the power set point ($P_{ref}$) the maximum reactive current value ($I_{dmax}$) has its biggest value according to the dependency.

6. The method according to claims 3 and 4 or claim 5, wherein in case that the estimated reactive current value ($I_{de}$) falls below the minimum reactive current value ($I_{dmin}$), the optimum terminal voltage magnitude ($|V_{ter}|_{opt}$) is the terminal voltage magnitude ($|V_{ter}|$) where for the power set point ($P_{ref}$) the minimum reactive current value ($I_{dmin}$) has its lowest value according to the dependency.

7. The method according to one of claims 4 to 6, wherein in case that the power set point ($P_{ref}$) becomes zero in step b), the voltage set point ($|V_{ter}|_{ref}$) and the power set point ($P_{ref}$) are set to predetermined values.

8. The method according to one of the preceding claims, wherein the control means comprises a voltage controller (VC), where the output of the voltage controller (VC) is the adjusted reactive current ($I_d$) or where in each control step the estimated reactive current value ($I_{de}$) is used as an offset value for the output of the voltage controller (VC).

9. The method according to one of the preceding claims, wherein the control means comprises a phase estimator (PE) for estimating the terminal voltage phase ($\theta$), where the output of the phase estimator (PE) is the estimated terminal voltage phase ($\theta$) or where in each control step a terminal voltage phase ($\theta_{FF}$) derived from the estimated reactive current value ($I_{de}$) is used as an offset value for the output of the phase estimator (PE).

10. The method according one of the preceding claims in combination with claim 8, wherein the voltage controller (VC) is a PI controller comprising a proportional gain parameter ($K_p$) and an integral gain parameter ($K_i$) as control parameters.

11. The method according to one of the preceding claims, wherein one or more control parameters of the control means are changed in case of variations of one or more parameters of the power grid (G), particularly in case of variations of the Short Circuit Ratio.

12. The method according to claim 10 and 11, wherein in case of a decreasing Short Circuit Ratio

    - the proportional gain parameter ($K_p$) and the integral gain parameter ($K_i$) are decreased if the variation of the active power (P) is below a predetermined threshold;
    - the proportional gain ($K_p$) and the integral gain ($K_i$) are increased if the variation of the active power (P) exceeds the predetermined threshold.

13. The method according to one of the preceding claims, wherein the power generation plant is a wind farm comprising one or more wind turbines as generators (WT).

14. Power generation plant comprising a number of generators (WT), where the power generation plant is adapted to perform a method according to one of the preceding claims, when the generators (WT) are connected to an electric power grid (G).

15. Computer program product comprising a program code stored on a machine readable medium for performing a method according to one of claims 1 to 13 when the program code is executed on a computer.

**Patentansprüche**

1. Verfahren zur Steuerung einer Stromerzeugungsanlage, die eine Anzahl von Generatoren (WT) umfasst, die an ein elektrisches Stromnetz (G) angeschlossen sind, wobei das Verfahren **dadurch gekennzeichnet ist, dass**:

   für jeden Generator (WT) ein Spannungssollwert ($|V_{ter}|_{ref}$) für einen Klemmenspannungsbetrag ($|V_{ter}|$) an einer Klemme des Generators (WT) und ein Leistungssollwert ($P_{ref}$) für die von dem Generator (WT) erzeugte Wirkleistung (P) einem Steuerungsmittel des Generators (WT) zugeführt werden, wobei das Steuerungsmittel in nachfolgenden Steuerungsschritten einen Blindstrom ($I_d$) und einen Wirkstrom ($I_q$), die von dem Generator (WT) geliefert werden, so einstellt, dass der Klemmenspannungsbetrag ($|V_{ter}|$) und die Wirkleistung (P) den Spannungs- und den Leistungssollwert ($|V_{ter}|_{ref}$, $P_{ref}$) erreichen, wobei in jedem Steuerungsschritt:

   i) der Blindstrom ($I_d$) für den Spannungs- und den Leistungssollwert ($|V_{ter}|_{ref}$, $P_{ref}$) basierend auf einem elektrischen Schaltungsmodell des Generators (WT) und des Stromnetzes (G) geschätzt wird, woraus ein geschätzter Blindstromwert ($I_{de}$) resultiert;
   ii) falls der geschätzte Blindstromwert ($I_{de}$) ein Kriterium der Schwellenwertüberschreitung erfüllt, der Spannungs- und/oder der Leistungssollwert ($|V_{ter}|_{ref}$, $P_{ref}$) variiert werden, wobei das Kriterium der Schwellenwertüberschreitung immer erfüllt ist, wenn der geschätzte Blindstromwert ($I_{de}$) einen maximalen Blindstromwert ($I_{dmax}$) überschreitet oder unter einen minimalen Blindstromwert ($I_{dmin}$) abfällt;
   iii) das Steuerungsmittel den Blindstrom ($I_d$) und den Wirkstrom ($I_q$) basierend auf dem Spannungs- und/oder dem Leistungssollwert ($|V_{ter}|_{ref}$, $P_{ref}$) einstellt, die nach Schritt ii) erhalten wurden.

2. Verfahren nach Anspruch 1, wobei das Kriterium der Schwellenwertüberschreitung derart definiert ist, dass es erfüllt ist, falls der geschätzte Blindstromwert ($I_{de}$) den maximalen Blindstromwert ($I_{dmax}$) oder den maximalen Blindstromwert ($I_{dmax}$) abzüglich eines positiven Margenwertes überschreitet, und falls der geschätzte Blindstromwert ($I_{de}$) unter den minimalen Blindstromwert ($I_{dmin}$) oder den minimalen Blindstromwert ($I_{dmin}$) zuzüglich eines positiven Margenwertes abfällt.

3. Verfahren nach Anspruch 1 oder 2, wobei der maximale Blindstromwert ($I_{de}$) in Schritt ii) basierend auf einer Abhängigkeit des maximalen Blindstromwertes ($I_{dmax}$) von dem Spannungs- und dem Leistungssollwert ($|V_{ter}|_{ref}$, $P_{ref}$) bestimmt wird, und/oder wobei der minimale Blindstromwert ($I_{dmin}$) in Schritt ii) basierend auf einer Abhängigkeit des minimalen Blindstromwertes ($I_{dmin}$) von dem Spannungs- und dem Leistungssollwert ($|V_{ter}|_{ref}$, $P_{ref}$) bestimmt wird.

4. Verfahren nach einem der vorhergehenden Ansprüche, wobei in Schritt ii) das Variieren des Spannungs- und/oder des Leistungssollwertes ($|V_{ter}|_{ref}$, $P_{ref}$) die folgenden Schritte umfasst:

   a) falls der Spannungssollwert ($|V_{ter}|_{ref}$) nicht gleich einem optimalen Klemmenspannungsbetrag ($|V_{ter}|_{opt}$) ist, wird nur der Spannungssollwert ($|V_{ter}|_{ref}$) in Richtung des optimalen Klemmenspannungsbetrages ($|V_{ter}|_{opt}$) variiert;
   b) falls der Spannungssollwert ($|V_{ter}|_{ref}$) gleich dem optimalen Klemmenspannungsbetrag ($|V_{ter}|_{opt}$) ist, wird nur der Leistungssollwert ($P_{ref}$) variiert.

5. Verfahren nach den Ansprüchen 3 und 4, wobei, falls der geschätzte Blindstromwert ($I_{de}$) den maximalen Blindstromwert ($I_{dmax}$) überschreitet, der optimale Klemmenspannungsbetrag ($|V_{ter}|_{opt}$) der Klemmenspannungsbetrag ($|V_{ter}|$) ist, bei dem für den Leistungssollwert ($P_{ref}$) der maximale Blindstromwert ($I_{dmax}$) gemäß der Abhängigkeit seinen größten Wert hat.

6. Verfahren nach den Ansprüchen 3 und 4 oder Anspruch 5, wobei, falls der geschätzte Blindstromwert ($I_{de}$) unter den minimalen Blindstromwert ($I_{dmin}$) abfällt, der optimale Klemmenspannungsbetrag ($|V_{ter}|_{opt}$) der Klemmenspannungsbetrag ($|V_{ter}|$) ist, bei dem für den Leistungssollwert ($P_{ref}$) der minimale Blindstromwert ($I_{dmin}$) gemäß der Abhängigkeit seinen niedrigsten Wert hat.

7. Verfahren nach einem der Ansprüche 4 bis 6, wobei, falls der Leistungssollwert ($P_{ref}$) in Schritt b) null wird, der Spannungssollwert ($|V_{ter}|_{ref}$) und der Leistungssollwert ($P_{ref}$) auf vorbestimmte Werte gesetzt werden.

8. Verfahren nach einem der vorhergehenden Ansprüche, wobei das Steuerungsmittel einen Spannungsregler (VC) umfasst, wobei der Ausgang des Spannungsreglers (VC) der eingestellte Blindstrom ($I_d$) ist, oder wobei in jedem Steuerungsschritt der geschätzte Blindstromwert ($I_{de}$) als ein Korrekturwert für den Ausgang des Spannungsreglers (VC) verwendet wird.

9. Verfahren nach einem der vorhergehenden Ansprüche, wobei das Steuerungsmittel einen Phasenschätzer (PE) zum Schätzen der Klemmenspannungsphase ($\theta$) umfasst, wobei der Ausgang des Phasenschätzers (PE) die geschätzte Klemmenspannungsphase ($\theta$) ist, oder wobei in jedem Steuerungsschritt eine von dem geschätzten Blindstromwert ($I_{de}$) abgeleitete Klemmenspannungsphase ($\theta_{FF}$) als ein Korrekturwert für den Ausgang des Phasenschätzers (PE) verwendet wird.

10. Verfahren nach einem der vorhergehenden Ansprüche in Kombination mit Anspruch 8, wobei der Spannungsregler (VC) ein PI-Regler ist, der einen Proportionalverstärkungsparameter ($K_p$) und einen Integralverstärkungsparameter ($K_i$) als Steuerparameter umfasst.

11. Verfahren nach einem der vorhergehenden Ansprüche, wobei ein oder mehrere Steuerparameter des Steuerungsmittels im Falle von Änderungen eines oder mehrerer Parameter des Stromnetzes (G) geändert werden, insbesondere im Falle von Änderungen des Kurzschlussverhältnisses.

12. Verfahren nach Anspruch 10 und 11, wobei im Falle eines sich verringernden Kurzschlussverhältnisses

- der Proportionalverstärkungsparameter ($K_p$) und der Integralverstärkungsparameter ($K_i$) verringert werden, falls die Änderung der Wirkleistung (P) unter einem vorbestimmten Schwellenwert liegt;
- die Proportionalverstärkung ($K_p$) und die Integralverstärkung ($K_i$) erhöht werden, falls die Änderung der Wirkleistung (P) den vorbestimmten Schwellenwert überschreitet.

13. Verfahren nach einem der vorhergehenden Ansprüche, wobei die Stromerzeugungsanlage ein Windpark ist, der ein oder mehrere Windenergieanlagen als Generatoren (WT) umfasst.

14. Stromerzeugungsanlage, welche eine Anzahl von Generatoren (WT) umfasst, wobei die Stromerzeugungsanlage dafür ausgelegt ist, ein Verfahren nach einem der vorhergehenden Ansprüche auszuführen, wenn die Generatoren (WT) an ein elektrisches Stromnetz (G) angeschlossen sind.

15. Computerprogrammprodukt, welches einen auf einem maschinenlesbaren Medium gespeicherten Programmcode zum Ausführen eines Verfahrens nach einem der Ansprüche 1 bis 13, wenn der Programmcode auf einem Computer ausgeführt wird, umfasst.

**Revendications**

1. Procédé de commande d'une installation de production d'énergie comprenant un certain nombre de générateurs (WT) reliés à une grille d'alimentation électrique (G), le procédé étant **caractérisé en ce que** :

pour chaque générateur (WT), un point de réglage de tension ($|V_{ter}|_{ref}$) pour une amplitude de tension aux bornes ($|V_{ter}|$) au niveau d'une borne du générateur (WT) et un point de réglage d'énergie ($P_{ref}$) pour l'énergie active (P) générée par le générateur (WT) sont alimentés vers un moyen de commande du générateur (WT), où le moyen de commande règle, dans des étapes de commande ultérieures, un courant réactif ($I_d$) et un courant actif ($I_q$) fournis par le générateur (WT) afin que l'amplitude de tension aux bornes ($|V_{ter}|$) et la puissance active (P) atteignent les points de réglage de tension et d'énergie ($|V_{ter}|_{ref}$, $P_{ref}$), dans lequel dans chaque étape de commande :

i) le courant réactif ($I_d$) est estimé pour les points de réglage de tension et d'énergie ($|V_{ter}|_{ref}$, $P_{ref}$) sur la base d'un modèle de circuit électrique du générateur (WT) et de la grille d'alimentation (G), entraînant une valeur de courant réactif estimée ($I_{de}$) ;
ii) si la valeur de courant réactif estimée ($I_{de}$) satisfait un critère de dépassement de seuil, les points de réglage de tension et/ou d'énergie ($|V_{ter}|_{ref}$, $P_{ref}$) varient, où le critère de dépassement de seuil est toujours satisfait lorsque la valeur de courant réactif estimée ($I_{de}$) dépasse une valeur de courant réactif maximum ($I_{dmax}$) ou tombe sous une valeur de courant réactif minimum ($I_{dmin}$) ;
iii) le moyen de commande règle le courant réactif ($I_d$) et le courant actif ($I_q$) sur la base des points de réglage de tension et/ou d'énergie ($|V_{ter}|_{ref}$, $P_{ref}$) tels qu'obtenus après l'étape ii).

2. Procédé selon la revendication 1, dans lequel le critère de dépassement de seuil est défini de sorte qu'il est rempli au cas où la valeur de courant réactif estimée ($I_{de}$) dépasse la valeur de courant réactif maximum ($I_{dmax}$) ou la valeur de courant réactif maximum ($I_{dmax}$) moins une valeur de marge positive, et au cas où la valeur de courant réactif estimée ($I_{de}$) tombe sous la valeur de courant réactif minimum ($I_{dmin}$) ou la valeur de courant réactif minimum ($I_{dmin}$) plus une valeur de marge positive.

3. Procédé selon la revendication 1 ou 2, dans lequel la valeur de courant réactif maximum ($I_{de}$) est déterminée dans l'étape ii) sur la base d'une dépendance de la valeur de courant réactif maximum ($I_{dmax}$) sur les points de réglage de tension et d'énergie ($|V_{ter}|_{ref}$, $P_{ref}$), et/ou dans lequel la valeur de courant réactif minimum ($I_{dmin}$) est déterminée dans l'étape ii) sur la base d'une dépendance de la valeur de courant réactif minimum ($I_{dmin}$) sur les points de réglage de tension et d'énergie ($|V_{ter}|_{ref}$, $P_{ref}$).

4. Procédé selon l'une des revendications précédentes, dans lequel dans l'étape ii) la variation des points de réglage de tension et/ou d'énergie ($|V_{ter}|_{ref}$, $P_{ref}$) comprend les étapes suivantes :

   a) si le point de réglage de tension ($|V_{ter}|_{ref}$) n'est pas égal à une amplitude de tension aux bornes optimum ($|V_{ter}|_{opt}$), seul le point de réglage de tension ($|V_{ter}|_{ref}$) varie vers l'amplitude de tension aux bornes optimum ($|V_{ter}|_{opt}$);
   b) si le point de réglage de tension ($|V_{ter}|_{ref}$) est égal à l'amplitude de tension aux bornes optimum ($|V_{ter}|_{opt}$), seul le point de réglage d'énergie ($P_{ref}$) varie.

5. Procédé selon les revendications 3 et 4, dans lequel au cas où la valeur de courant réactif estimée ($I_{de}$) dépasse la valeur de courant réactif maximum ($I_{dmax}$), l'amplitude de tension aux bornes optimum ($|V_{ter}|_{opt}$) est l'amplitude de tension aux bornes ($|V_{ter}|$) où pour le point de réglage d'énergie ($P_{ref}$) la valeur de courant réactif maximum ($I_{dmax}$) a sa valeur la plus importante en fonction de la dépendance.

6. Procédé selon les revendications 3 et 4 ou la revendication 5, dans lequel au cas où la valeur de courant réactif estimée ($I_{de}$) tombe sous la valeur de courant réactif minimum ($I_{dmin}$), l'amplitude de tension aux bornes optimum ($|V_{ter}|_{opt}$) est l'amplitude de tension aux bornes ($|V_{ter}|$) où pour le point de réglage d'énergie ($P_{ref}$) la valeur de courant réactif minimum ($I_{dmin}$) a sa valeur la plus basse en fonction de la dépendance.

7. Procédé selon l'une des revendications 4 à 6, dans lequel au cas où le point de réglage d'énergie ($P_{ref}$) devient zéro dans l'étape b), le point de réglage de tension ($|V_{ter}|_{ref}$) et le point de réglage d'énergie ($P_{ref}$) sont réglés à des valeurs prédéterminées.

8. Procédé selon l'une des revendications précédentes, dans lequel le moyen de commande comprend un contrôleur de tension (VC), où la sortie du contrôleur de tension (VC) est le courant réactif réglé ($I_d$) ou où dans chaque étape de commande, la valeur de courant réactif estimée ($I_{de}$) est utilisée en tant que valeur de décalage pour la sortie du contrôleur de tension (VC).

9. Procédé selon l'une des revendications précédentes, dans lequel le moyen de commande comprend un estimateur de phase (PE) permettant d'estimer la phase de tension aux bornes ($\theta$), où la sortie de l'estimateur de phase (PE) est la phase de tension aux bornes estimée ($\theta$) ou où dans chaque étape de commande, une phase de tension aux bornes ($\theta_{FF}$) déduite de la valeur de courant réactif estimée ($I_{de}$) est utilisée en tant que valeur de décalage pour la sortie de l'estimateur de phase (PE).

10. Procédé selon l'une des revendications précédentes en combinaison avec la revendication 8, dans lequel le contrôleur de tension (VC) est un contrôleur PI comprenant un paramètre de gain proportionnel ($K_p$) et un paramètre de gain intégral ($K_i$) en tant que paramètres de contrôle.

11. Procédé selon l'une des revendications précédentes, dans lequel un ou plusieurs paramètres de contrôle des moyens de commande sont modifiés en cas de variations d'un ou plusieurs paramètres de la grille d'alimentation (G), particulièrement en cas de variations du rapport de court-circuit.

12. Procédé selon les revendications 10 et 11, dans lequel en cas de diminution du rapport de court-circuit

- le paramètre de gain proportionnel ($K_p$) et le paramètre de gain intégral ($K_i$) diminuent si la variation de l'énergie active (P) se situe sous un seuil prédéterminé ;
- le gain proportionnel ($K_p$) et le gain intégral ($K_i$) augmentent si la variation de la puissance active (P) dépasse le seuil prédéterminé.

13. Procédé selon l'une des revendications précédentes, dans lequel l'installation de production d'énergie est un parc éolien comprenant une ou plusieurs turbines éoliennes en tant que générateurs (WT).

14. Installation de production d'énergie comprenant un certain nombre de générateurs (WT), où l'installation de production d'énergie est adaptée pour mettre en oeuvre un procédé selon l'une des revendications précédentes, lorsque les générateurs (WT) sont reliés à une grille d'alimentation électrique (G).

15. Produit de programme informatique comprenant un code de programmes stocké sur un support lisible par machine permettant de mettre en oeuvre un procédé selon l'une des revendications 1 à 13 lorsque le code de programme est exécuté sur un ordinateur.

FIG 1

FIG 2

FIG 3

FIG 4

# FIG 5

S1 — $I_{de}, P_{ref}, |V_{ter}|_{ref}$

S2 — $I_{de} \leq I_{dmax}?$
$I_{de} \geq I_{dmin}?$ — Y

N

S3 — $\Delta P_{ref}, \Delta |V_{ter}|_{ref}$

S4 — CO

# FIG 6

B3
$| \; |$

B1

$P_{ref}$ → $I_{de}$ $I_{dmax}$ $I_{dmin}$ → $P_{ref}$

$|V_{ter}|_{ref}$ →

$|V_{ter}|_{ref}$

$-$ + $|V_{ter}|$

B2 → $I_q$

$\theta_{FF}$ AD' PE

PLL ← $V_{ter}$

$\theta$

$I_q$

$K_p, K_i$

VC

AD

$I_{de}$

B4 → $V_{ter}$

FIG 7

EP 2 799 944 B1

# FIG 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1035626 A2